# EUROPÄISCHE PATENTANMELDUNG

(11) **EP 1 760 463 A2**
(43) Veröffentlichungstag der Anmeldung: **07.03.2007**
(21) Anmeldenummer: 06100700.1
(22) Anmeldetag: 04.05.2001
(51) Int. Cl.: G01N 27/447

(54) **Verfahren und Vorrichtung zur qualitativen und/oder quantitativen Bestimmung eines Protein- und/oder Peptidmusters einer Flüssigkeitsprobe, die dem menschlichen oder tierischen Körper entnommen wird**

(30) Priorität: 04.05.2000 DE 10021737
(62) Teilanmeldung aus: 01943018.0
(71) Anmelder: mosaiques diagnostics and therapeutics AG, 30625 Hannover (DE)
(72) Erfinder: Mischak, Harald, 31319, Sehnde (DE); Haller, Hermann, 30559, Hannover (DE)
(74) Vertreter: Schreiber, Christoph

(57) **Zusammenfassung**

Die Erfindung betrifft ein Verfahren zur qualitativen und/oder quantitativen Bestimmung eines Protein- und/oder Peptidmusters einer Flüssigkeitsprobe, die dem menschlichen oder tierischen Körper entnommen wird. Die Proteine und Peptide der Flüssigkeitsprobe werden mittels Kapillarelektrophorese getrennt, anschließend direkt ionisiert und online über ein Interface in ein daran gekoppeltes Massenspektrorneter zur Detektion überführt.

## Beschreibung

Die Erfindung betrifft ein Verfahren nach dem Oberbegriff des Anspruchs 1 und eine Vorrichtung nach dem Oberbegriff des Anspruchs 8.

Die Funktionen des menschlichen und tierischen Organismus unterliegen einer sehr komplexen und exakten Steuerung. Diese erfolgt unter anderen mittels Proteinen und Peptiden über das Serum.

Eine entscheidende Rolle spielen dabei die Cytokine. Dies sind Polypeptide, die von Zellen in das Blut oder das umgebende Gewebe ausgeschieden werden und nach Bindung an spezifischen Rezeptoren Funktionen wie Teilung, Wachstum oder Fortbewegung anderer Zellen beeinflussen. Cytokine regulieren unter anderen das komplizierte Wechselspiel der Zellen des Immunsystems.

Zu den Cytokinen gehören auch die sogenannten Interleukine. Dies sind Mediator-Stoffe des Immunsystems, die von Leukocyten in geringen Konzentrationen produziert werden und auf Wachstum, Differenzierung und Aktivität von Zellen des Immunsystem Einfluß nehmen.

Um die Funktionen und den Zustand eines menschlichen oder tierischen Körpers zu erfassen, ist die qualitative und/oder quantitative Bestimmung der Proteine und/oder Peptide einer Flüssigkeitsprobe, die dem menschlichen oder tierischen Körper entnommen wird, erforderlich.

Zur qualitativen und/oder quantitativen Bestimmung einzelner Proteine oder Peptide in Flüssigkeitsproben, die dem menschlichen oder tierischen Körper entnommen werden, ist die Verwendung von Enzymimmunoassays bekannt. Prinzipiell ist hier eine Antigen-Antikörper-Reaktion an eine enzymatische Reaktion gekoppelt, wobei entweder Antikörper-Enzym-Konjugate oder Antigen-Enzym-Konjugate verwendet werden, die nach Zugabe von geeignetem Substrat durch die Messung der Enzym-Aktivität des Konjugats bestimmt werden.

Im allgemeinen bedient man sich der Festphasen-Technik des ELISA (enzyme linked immunosorbent assay), wo das Antigen entweder durch direkte Adsorption oder über einen weiteren Antikörper an die feste Phase gebunden wird.

Einige der Proteine und Peptide werden im Rahmen der heutigen medizinisch-klinischen Untersuchungen schon qualitativ und/oder quantitativ ermittelt.

Eine genaue Kenntnis der Proteine und Peptide sowie deren Konzentration in Flüssigkeitsproben, insbesondere im Serum, gewinnt im Rahmen medizinisch-klinischer Untersuchungen zunehmend an Bedeutung.

Es hat sich herausgestellt, daß der Zustand eines menschlichen oder tierischen Körpers unter Heranziehung des Protein- und/oder Peptidmusters relativ gut beschrieben werden kann.

Nachteilig an der bisher verwendeten Methode des ELISA ist jedoch, daß immer nur ein Protein oder Peptid bestimmt werden kann. Um ein möglichst vollständiges Protein- und/oder Peptidmuster zu erhalten, müssen daher eine Vielzahl von Proteinen und/oder Peptiden einzeln bestimmt werden.

Viele Proteine oder Peptide sind außerdem nicht bestimmbar, da keine zur Detektion erforderlichen Reagenzien, beispielsweise spezifische Antikörper, zur Verfügung stehen.

Aufgrund der geringen Anzahl von Messungen ist es dann mitunter schwierig, aussagekräftige Schlußfolgerungen über den Zustand eines menschlichen oder tierischen Körpers zu ziehen.

Insbesondere stehen die Ergebnisse der medizinisch-klinischen Untersuchungen erst Stunden nach Entnahme der Flüssigkeitsprobe zur Verfügung, so daß keine zeitnahen Aussagen über den Zustand des menschlichen oder tierischen Körpers möglich sind.

Mit der Methode des ELISA ist es daher nicht möglich, schnell ein umfassendes und damit aussagekräftiges Protein- und/oder Peptidmuster zu erstellen.

Nachteilig an der Methode des ELISA ist weiterhin, daß zur Bestimmung der Konzentration einzelner Proteine oder Peptide in unbekannten Flüssigkeitsproben Vergleichmessungen von Proben verschiedener bekannter Protein- oder Peptidkonzentrationen, sogenannte Standards, notwendig sind. Diese Messungen sind gleichermaßen zeit- und kostenintensiv, weil ebenfalls immer nur ein einzelnes Protein oder Peptid bestimmt werden kann.

Die zur Verfügung stehenden und zur Anwendung kommenden klassischen Analysenmethoden zur Bestimmung eines Protein- und/oder Peptidmusters einer Flüssigkeitsprobe, die dem menschlichen oder tierischen Körper entnommen wird, können daher nicht voll befriedigen.

Der Erfindung liegt die Aufgabe zugrunde, ein Verfahren zur qualitativen und/oder quantitativen Bestimmung eines Protein- und/oder Peptidmusters einer Flüssigkeitsprobe, die dem menschlichen oder tierischen Körper entnommen wird, und eine Vorrichtung zur Durchführung und Auswertung des Verfahrens bereitzustellen, die eine vollständige und schnelle Bestimmung der Proteine und/oder Peptide ermöglicht.

Diese Aufgabe wird bei einem Verfahren mit den Merkmalen des Anspruchs 1 und bei einer Vorrichtung mit den Merkmalen des Anspruchs 8 gelöst. Weiterbildungen und vorteilhafte Ausgestaltungen ergeben sich aus den Unteransprüchen.

Das erfindungsgemäße Verfahren zur qualitativen und/oder quantitativen Bestimmung eines Protein- und/oder Peptidmusters einer Flüssigkeitsprobe, die dem menschlichen oder tierischen Körper entnommen wird, sieht vor, daß die Proteine und/oder Peptide der Flüssigkeitsprobe mittels Kapillarelektrophorese getrennt, anschließend direkt ionisiert und online über ein Interface in ein daran gekoppeltes Massenspektrometer zur Detektion überführt werden.

Eine zuverlässige qualitative und quantitative Bestimmung von Proteinen und/oder Peptiden in einer komplexen Matrix, wie sie die menschliche oder tierische Körperflüssigkeit darstellt, erfordert zunächst den Einsatz einer Methode zur Stofftrennung. Als geeignete Trennmethode hat sich hierbei die Kapillarelektrophorese erwiesen.

Das Trennprinzip der Elektrophorese besteht in dem unterschiedlichen Wanderungsverhalten elektrisch geladener Teilchen in Lösung beim Anlegen eines elektrischen Feldes. Der Vorteil der Kapillaren besteht in dem günstigen Verhältnis Oberfläche/Volumen, was einen guten Abtransport der beim Stromfluß entstehenden Jouleschen Wärme ermöglicht. Dies wiederum erlaubt das Anlegen hoher Spannungen (üblicherweise bis 30 kV) und damit eine hohe Trennleistung und kurze Analysenzeiten.

Die hohe Trennleistung ermöglicht die Bestimmung eines vollständigen Protein- und/oder Peptidmusters der Flüssigkeitsprobe. Die kurzen Analysenzeiten erlauben, zeitnahe Aussagen über den Zustand des menschlichen oder tierischen Körper, dem die Flüssigkeitsprobe entnommen worden ist, zu machen.

Mit Hilfe der Kapillarelektrophorese ist es möglich, neutrale Moleküle, Kationen und Anionen zu trennen. Neutrale Teilchen wandern beim Anlegen eines Stroms mit der Geschwindigkeit des elektroosmotischen Flusses, Kationen werden zur Kathode beschleunigt und Anionen verzögert.

Zur Detektion der mittels Kapillarelektrophorese getrennten Proteine und/oder Peptide ist das Kapillarelektrophoresegerät an einen Massenspektrometer gekoppelt.

Die Massenspektrometrie erlaubt die Bestimmung der Molekülmasse freier Ionen im Hochvakuum. Es enthält einen Massenanalysator, der die Ionen nach ihrem Masse/Ladungs-Quotienten (m/z) auftrennt, und einen Detektor.

Weil die Ionisation unter Atmosphärendruck stattfindet, die Massenanalyse jedoch ein Hochvakuum erfordert, ist ein entsprechender Übergang, ein sogenanntes Interface, vorgesehen.

Mit der Massenspektrometrie ist es möglich, routinemäßig 10 fmol eines Peptids bzw. kleinen Proteins, also 0,1 ng eines 10 kDa Proteins, mit einer Massengenauigkeit von ± 0,01 % aus einem komplexen Gemisch zu vermessen. Experimentell werden bereits noch weniger als 0,1 fmol vermessen.

Damit ist diese Methode vor allem dazu geeignet, komplexe Flüssigkeitsproben, die dem menschlichen oder tierischen Körper entnommen werden, auf die Anwesenheit bestimmter Proteine und Peptide zu untersuchen.

Insbesondere ist vorgesehen, daß als Flüssigkeitsprobe Serum oder Urin verwendet wird.

Dabei handelt es sich um Flüssigkeitsproben, die dem menschlichen Körper entnommen werden und über eine Protein- und/oder Peptidzusammensetzung verfügen, die besonders gut geeignet sind, Aussagen über den Zustand des menschlichen oder tierischen Körpers zu machen.

Die massenspektrometrische Analyse besitzt gegenüber den derzeit gängigen Methoden den Vorteil, daß die Konzentration vieler (> 100) Peptide und Proteine einer Serum- oder U-rinprobe mittels einer einzigen Analyse bestimmt werden kann. Außerdem können derzeit noch unbekannte Proteine oder Peptide, die den Zustand des menschlichen oder tierischen Körpers beschreiben, identifiziert werden.

Durch das erfindungsgemäße Verfahren wird erreicht, daß gegenüber den herkömmlichen Bestimmungsmethoden nur ein Arbeitsgang notwendig ist, um mehrere Proteine und/oder Peptide zu bestimmen. Das bedeutet Zeit- und Kostenersparnis.

Das erhaltene Massenspektrums kann zum einen als eine Art "Fingerprint" zur Beschreibung des Gesamtzustandes eines menschlichen oder tierischen Köpers herangezogen werden. Insbesondere können auch nur bestimmte Bereiche des Massenspektrums ausgewertet werden.

Zum anderen ist es aber auch möglich, die Proteine einzeln zu identifizieren und über ihre Anwesenheit, Nichtanwesenheit und ihre Konzentration Schlußfolgerungen über den Zustand des menschlichen oder tierischen Köpers zu ziehen.

Weiterhin ist vorgesehen, daß das Protein- und/oder Peptidmuster, wie z. B. das Muster der Cytokine, insbesondere der Interleukine, bestimmt wird.

Diese Proteine sind nach derzeitigem Wissen wesentlich, die Funktionen des menschlichen und tierischen Organismus steuernde Proteine.

Eine Weiterbildung sieht vor, daß die Flüssigkeitsprobe vor ihrer Trennung mittels Kapillarelektrophorese zunächst angesäuert wird, mittels Ultrazentrifugation von unerwünschten Partikeln gereinigt und/oder mittels Ultrafiltration in Fraktionen, die Proteine und/oder Peptide bestimmter molekularer Größe enthalten, aufgeteilt wird.

Nach dem Ansäuern, beispielsweise mit Ameisensäure auf einen pH-Wert 3, ist es möglich, die unerwünschten unlöslichen Probenbestandteile durch Ultrazentrifugation abzutrennen. Durch eine Fraktionierung der Flüssigkeitsprobe wird erreicht, daß beispielsweise nur Fraktionen von Proteinen und/oder Peptiden bestimmter Molekulargewichte untersucht werden, die zur Beschreibung des Zustandes eines menschlichen oder tierischen Körpers gerade benötigt werden.

Dazu ist vorgesehen, daß sich die Fraktionen aus Proteinen und/oder Peptiden der Molekulargewichten <3 kDa, 3-30 kDa, 30-50 kDa und >50 kDa zusammensetzen.

Sollen beispielsweise die zu der Gruppe der Cytokine gehörenden Interleukine, die hauptsächlich Glykoproteine mit Molekulargewichten von 17 kDa bis 26 kDa umfassen, bestimmt werden, so reicht es, die Fraktion aus Proteinen und/oder Peptiden der Molekulargewichte 3-30 kDa zu verwenden. Dies wiederum bedeutet eine Verkürzung der Analysenzeiten.

Weiterhin ist es möglich, daß die Proteine und/oder Peptide direkt nach ihrer Trennung, aber vor ihrer Ionisation detektiert werden.

Zur Detektion der mittels Kapillarelektrophorese getrennten Proteine und/oder Peptide sind bereits eine Reihe von Verfahren bekannt, die eine gute qualitative und quantitative Proteinanalytik aber nur in Ausnahmefällen ermöglichen.

Daher ist die vorgesehene Detektion nur in Verbindung mit der Massenspektrometrie zur genaueren Bestimmung der Proteine und/oder Peptide geeignet.

Eine vorteilhafte Ausgestaltung der Erfindung sieht vor, daß zur Ionisation der Proteine und/oder Peptide die Elektrospray-Ionisation verwendet wird.

Hierbei werden die in Lösung vorliegenden Moleküle unter anderem unter dem Einfluß einer Hochspannung (1-8 kV) versprüht, wobei sich zunächst kleine geladene Tröpfchen bilden, die durch Verdampfung des Lösungsmittels kleiner werden. Schließlich kommt es zur Bildung freier gasförmiger Ionen.

Die Elektrospray-Ionisation ist auf Grund der relativ geringen auf die Moleküle wirkenden Energien eine milde Ionisierungstechnik, so daß selbst empfindliche Moleküle und teilweise sogar nichtkovalente Aggregate unzersetzt in den Massenanalysator gelangen.

Vorteilhaft ist, daß bei der Elektrospray-Ionisation primär keine Molekülfragmente entstehen. Dadurch wird zwar die Aufklärung der Molekülstruktur erschwert, aber eine sehr gute Identifizierung der in der Flüssigkeitsprobe gelösten Proteine und/oder Peptide ermöglicht.

Die trotzdem bei der Ionisierung anfallenden Fragmente können bei kleineren Peptiden, beispielsweise bei Oligopeptiden mit weniger als 20 Aminosäuren, vorteilhaft zur Identifizierung der Aminosäuresequenz herangezogen werden.

Außerdem ist es möglich, daß als Massenspektrometer ein Flugzeitmassenspektrometer, ein sogenanntes TOF(von engl. time of flight)-Massenspektrometer, verwendet wird.

Bei einem TOF-Massenspektrometer wird eine bestimmte Beschleunigungsspannung angelegt, die den Ionen eine gleich große kinetische Energie verleiht. Dann wird sehr genau die Zeit gemessen, die die jeweiligen Ionen benötigen, um eine bestimmte Driftstrecke durch das Flugrohr zurückzulegen, da bei gleicher kinetischer Energie die Geschwindigkeit der Ionen von ihrer Masse abhängt.

TOF-Massenspektrometer haben eine sehr hohe Scangeschwindigkeit und erreichen daher eine sehr gute Auflösung. Sie ermöglichen die vollständige Identifizierung der in der Flüssigkeitsprobe befindlichen Proteine und/oder Peptide.

Die Erfindung betrifft außerdem eine Vorrichtung zur qualitativen und/oder quantitativen Erfassung eines Protein- oder Peptidmusters einer Flüssigkeitsprobe, die dem menschlichen oder tierischen Körper entnommen worden ist.

Die Vorrichtung umfaßt ein Kapillarelektrophoresegerät, eine Ionisierungseinheit, ein über ein Interface online gekoppeltes Massenspektrometer und eine Rechnereinheit mit einem Programm zur Steuerung der Vorrichtung sowie zur automatischen Auswertung und Speicherung der Meßwerte sowie zur Abgleichung neuer Meßwerte mit den bereits gespeicherten Meßwerten.

Eine solche Vorrichtung ermöglicht die zuverlässige Bestimmung der Proteine und/oder Peptide in einer komplexen Matrix.

Das Kapillarelektrophoresegerät verfügt deshalb zum einen über eine hohe Trennleistung, die die Bestimmung eines vollständigen Protein- und/oder Peptidmusters der Flüssigkeitsprobe ermöglicht, und zum anderen über kurze Analysenzeiten, die es erlauben, zeitnahe Aussagen über den Zustand des menschlichen oder tierischen Körper, dem die Flüssigkeitsprobe entnommen worden ist, zu machen.

Für die qualitative und/oder quantitative Bestimmung der Proteine und/oder Peptide ist das Kapillarelektrophoresegerät an ein Massenspektrometer gekoppelt, das die mittels Kapillarelektrophorese getrennten Proteine und/oder Peptide detektiert.

Die Rechnereinheit enthält ein Programm zur Steuerung der Vorrichtung. Außerdem werden die durch Detektion erhaltenen Meßwerte automatisch ausgewertet und abgespeichert. Weiterhin gleicht das Programm neue Meßwerte automatisch mit den bereits gespeicherten Meßwerten ab.

Durch den Abgleich werden übereinstimmende und abweichende Parameter ermittelt, die zur Beschreibung des Zustandes eines menschlichen oder tierischen Körpers herangezogen werden können.

Eine Weiterbildung sieht vor, daß das Programm die Peptid- oder Proteinmuster definierter Flüssigkeitsproben automatisch erfaßt und als Normalwerte in einer Referenzdatenbank speichert.

Dadurch ist es möglich, zunächst Protein- und/oder Peptidmuster von Flüssigkeitsproben menschlicher oder tierischer Körper zu bestimmen und als Referenzdaten abzuspeichern, bei denen der Zustand bekannt ist. Es wird eine umfangreiche Referenzdatenbank angelegt, die bei neuen Messungen automatisch zum Abgleich herangezogen werden kann.

Eine vorteilhafte Ausgestaltung der erfindungsgemäßen Vorrichtung sieht vor, daß das Programm die Peptid- oder Proteinmuster undefinierter Flüssigkeitsproben automatisch erfaßt, als Probenwerte in einer gesonderten Datenbank speichert, mit den Normalwerten der Referenzdatenbank abgleicht und Abweichungen und/oder Übereinstimmungen automatisch anzeigt und speichert.

Abweichungen oder Übereinstimmungen können als Parameter zur Beurteilung des Zustandes des menschlichen oder tierischen Köpers herangezogen werden.

Mittels der Datenbank ist es möglich, gleiche, ähnliche oder unterschiedliche Zustände des menschlichen oder tierischen Körpers zu identifizieren.

Außerdem ist es möglich, daß das Programm bei Bestimmungen aus mehreren in zeitlichen Abständen demselben menschlichen oder tierischen Körper entnommenen Flüssigkeitsproben die Veränderungen im Protein- und/oder Peptidmuster automatisch bestimmt, auswertet und speichert.

Damit wird die Kontrolle des Zustandes eines menschlichen oder tierischen Körpers über einen längeren Zeitraum sichergestellt.

Eine vorteilhafte Ausgestaltung sieht vor, daß das Programm automatisch eine Datenbank bestehend aus Zustände beschreibenden Referenzwerten, Probenwerten, Abweichungen und Übereinstimmungen erstellt und bei neuen Messungen automatisch nach bestmöglichen Übereinstimmungen sucht. Dadurch ist es möglich, Zustände menschlicher oder tierischer Körper automatisch bestimmen zu lassen.

Außerdem ist vorgesehen, daß die Flüssigkeitsprobe Serum oder Urin ist.

Dies sind Flüssigkeitsproben, die dem menschlichen Körper entnommen werden, und über eine Protein- und/oder Peptidzusammensetzung verfügen, die besonders gut geeignet sind, Aussagen über den Zustand des menschlichen oder tierischen Körpers zu machen.

Eine Weiterbildung sieht vor, daß die Proteine und Peptide z. B. Cytokine, insbesondere Interleukine, sind.

Diese Proteine sind nach derzeitigem Wissen wichtige, die Funktionen des menschlichen und tierischen Organismus steuernden Proteine.

Es ist weiterhin möglich, daß das Massenspektrometer ein Flugzeitmassenspektrometer ist.

Flugzeitmassenspektrometer haben eine sehr hohe Scangeschwindigkeit und erreichen daher eine sehr gute Auflösung. Dadurch ist es möglich, die das Protein- und/oder Peptidmuster vollständig zu bestimmen.

Zwischen Kapillarelektrophoresegerät und Ionisierungseinheit kann außerdem ein Detektor angeordnet sein. Dieser dient in Verbindung mit der Massenspektrometrie der besseren qualitativen und quantitativen Bestimmung des Protein- und/oder Peptidmusters.

Eine Weiterbildung sieht vor, daß die Ionisierungseinheit über Elektrospray-Ionisation verfügt.

Die Elektrospray-Ionisation ist auf Grund der relativ geringen auf die Moleküle wirkenden Energien eine milde Ionisierungstechnik, so daß selbst empfindliche Moleküle und teilweise sogar nichtkovalente Aggregate unzersetzt in den Massenanalysator gelangen. Dadurch wird eine sehr gute Identifizierung der in der Flüssigkeitsprobe gelösten Proteine und/oder Peptide ermöglicht.

Nachfolgend wird die Erfindung anhand eines Ausführungsbeispiels erläutert, das in der Zeichnung dargestellt ist. In dieser zeigen:

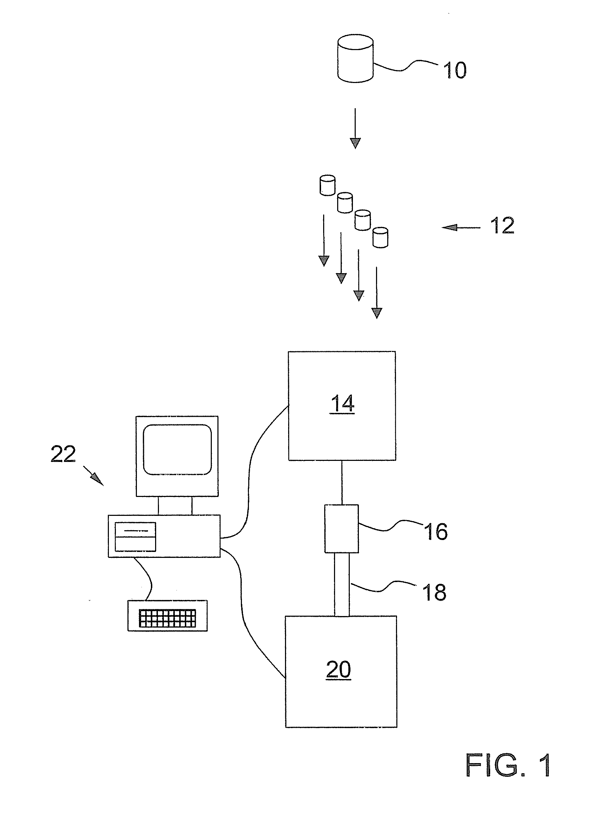

- Fig. 1: eine schematische Darstellung des erfindungsgemäßen Verfahrens.

Fig. 1 zeigt schematisch die einzelnen Schritte zur qualitativen und/oder quantitativen Bestimmung eines Protein- und/oder Peptidmusters einer Flüssigkeitsprobe 10, die dem menschlichen oder tierischen Körper entnommen wurde.

Dargestellt ist die Flüssigkeitsprobe 10, vorzugsweise Serum oder Urin, die nach Ultrazentrifugation und Ultrafiltration erhaltenen Fraktionen 12, ein Kapillarelektrophoresegerät 14, eine daran direkt angeschlossene Ionisierungseinheit 16, ein über ein Interface 18 online gekoppeltes Massenspektrometer 20 sowie eine Rechnereinheit 22 mit einem Programm zur Steuerung der Vorrichtung sowie zur automatischen Auswertung und Speicherung der Meßwerte sowie zur Abgleichung neuer Meßwerte mit den bereits gespeicherten Meßwerten.

Die dem menschlichen oder tierischen Körper entnommene Flüssigkeitsprobe 10 wird zunächst mit Ameisensäure auf einen pH-Wert 3 angesäuert. Anschließend wird die Flüssigkeitsprobe 10 mittels Ultrazentrifugation von unerwünschten Partikeln gereinigt und mittels Ultrafiltration in Fraktionen 12, die Proteine und/oder Peptide bestimmter molekularer Größen enthalten, aufgeteilt. Die Fraktionen 12 können sich aus Proteinen und/oder Peptiden der Molekulargewichte <3 kDa, 3-30 kDa, 30-50 kDa und >50 kDa zusammensetzen.

Anschließend werden die Proteine und/oder Peptide der einzelnen Fraktionen 12 mittels Kapillarelektrophorese 14 getrennt, in einer Ionisierungseinheit 16 direkt ionisiert und online über ein Interface 18 in ein daran gekoppeltes Massenspektrometer 20 zur Detektion überführt.

Natürlich besteht die Möglichkeit nur die Fraktionen 12 zu verwenden, deren Proteine und/oder Peptide zur Beschreibung des Zustandes eines menschlichen oder tierischen Körpers gerade benötigt werden.

Bei dem Massenspektrometer 20 handelt es sich vorteilhaft um ein TOF-Massenspektrometer, das eine sehr hoher Scangeschwindigkeit besitzt und eine sehr gute Auflösung erreicht.

Das erhaltene Massenspektrums kann zum einen als eine Art "Fingerprint" zur Beschreibung des Gesamtzustandes eines menschlichen oder tierischen Köpers herangezogen werden. Zum anderen ist es aber auch möglich, die Proteine einzeln zu identifizieren und über ihre Anwesenheit, Nichtanwesenheit und ihre Konzentration Schlußfolgerungen über den Zustand des menschlichen oder tierischen Köpers zu ziehen.

Die Rechnereinheit 22 enthält ein Programm zur Steuerung der Vorrichtung. Außerdem werden die durch Detektion erhaltenen Meßwerte automatisch ausgewertet und in Datenbanken abgespeichert. Weiterhin gleicht das Programm neue Meßwerte automatisch mit den bereits gespeicherten Meßwerten ab.

Durch den Abgleich werden übereinstimmende und abweichende Parameter ermittelt, die zur Beschreibung des Zustandes eines menschlichen oder tierischen Körpers herangezogen werden können.

Mittels der Datenbanken ist es möglich, gleiche, ähnliche oder unterschiedliche Zustände des menschlichen oder tierischen Körpers zu identifizieren.

Das erfindungsgemäße Verfahren zur qualitativen und/oder quantitativen Bestimmung eines Protein- und/oder Peptidmusters einer Flüssigkeitsprobe, die dem menschlichen oder tierischen Körper entnommen wird, kann von technisch ausgebildeten Personen durchgeführt werden. Die Anwendung bedarf keines Arztes und kann auch außerhalb medizinischer Laboratorien angewendet werden.

## Patentansprüche

1. Verfahren zur qualitativen und/oder quantitativen Bestimmung eines Protein- und/oder Peptidmusters einer Flüssigkeitsprobe 10, die dem menschlichen oder tierischen Körper entnommen wird, **dadurch gekennzeichnet, daß** die Peptide und Proteine der Flüssigkeitsprobe 10 mittels Kapillarelektrophorese getrennt, anschließend direkt ionisiert und online über ein Interface 18 in ein daran gekoppeltes Massenspektrometer 20 zur Detektion überführt werden.

2. Verfahren nach Anspruch 1, **dadurch gekennzeichnet, daß** als Flüssigkeitsprobe 10 Serum oder Urin verwendet wird.

3. Verfahren nach Anspruch 1 oder 2, **dadurch gekennzeichnet, daß** das Protein- und/oder Peptidmuster der Cytokine, insbesondere der Interleukine, bestimmt wird.

4. Verfahren nach einem der Ansprüche 1 bis 3, **dadurch gekennzeichnet, daß** die Flüssigkeitsprobe 10 vor ihrer Trennung mittels Kapillarelektrophorese zunächst angesäuert wird, mittels Ultrazentrifugation von unerwünschten Partikeln gereinigt und/oder mittels Ultrafiltration in Fraktionen 12, die Proteine und/oder Peptide bestimmter molekularer Größen enthalten, aufgeteilt wird.

5. Verfahren nach Anspruch 4, **dadurch gekennzeichnet, daß** sich die Fraktionen 12 aus Proteinen und/oder Peptiden der Molekulargewichte <3 kDa, 3-30 kDa, 30-50 kDa und >50 kDa zusammensetzen.

6. Verfahren nach einem der Ansprüche 1 bis 5, **dadurch gekennzeichnet, daß** zur Ionisation der Proteine und/oder Peptide die Elektrospray-Ionisation verwendet wird.

7. Verfahren nach einem der Ansprüche 1 bis 6, **dadurch gekennzeichnet, daß** als Massenspektrometer 20 ein Flugzeitmassenspektrometer verwendet wird.

8. Vorrichtung zur qualitativen und/oder quantitativen Erfassung eines Protein- oder Peptidmusters einer Flüssigkeitsprobe 10, die dem menschlichen oder tierischen Körper entnommen worden ist, **dadurch gekennzeichnet, daß** die Vorrichtung ein Kapillarelektrophoresegerät 14, eine Ionisierungseinheit 16, ein über ein Interface 18 online gekoppeltes Massenspektrometer 20 und eine Rechnereinheit 22 mit einem Programm zur Steuerung der Vorrichtung sowie zur automatischen Auswertung und Speicherung der Meßwerte und zur Abgleichung neuer Meßwerte mit den bereits gespeicherten Meßwerten enthält.

9. Vorrichtung nach Anspruch 8, **dadurch gekennzeichnet, daß** das Programm die Peptid- oder Proteinmuster definierter Flüssigkeitsproben 10 automatisch erfaßt und als Normalwerte in einer Referenzdatenbank speichert.

10. Vorrichtung nach Anspruch 8 oder 9, **dadurch gekennzeichnet, daß** das Programm die Peptid- oder Proteinmuster undefinierter Flüssigkeitsproben 10 automatisch erfaßt, als Probenwerte in einer Datenbank speichert, mit den Normalwerten der Referenzdatenbank abgleicht und Abweichungen und/oder Übereinstimmungen automatisch anzeigt.

11. Vorrichtung nach einem der Ansprüche 8 bis 10, **dadurch gekennzeichnet, daß** das Programm bei Bestimmungen aus mehreren in zeitlichen Abständen dem menschlichen oder tierischen Körper entnommenen Flüssigkeitsproben 10 die Veränderungen im Protein- und/oder Peptidmuster automatisch bestimmt, speichert und auswertet.

12. Vorrichtung nach einem der Ansprüche 8 bis 11, **dadurch gekennzeichnet, daß** das Programm automatisch eine Datenbank bestehend aus Zustände beschreibenden Referenzwerten, Probenwerten, Abweichungen und Übereinstimmungen erstellt und bei neuen Messungen automatisch nach bestmöglichen Übereinstimmungen sucht.

13. Vorrichtung nach einem der Ansprüche 8 bis 12, **dadurch gekennzeichnet, daß** die Flüssigkeitsprobe 10 Serum oder Urin ist.

14. Vorrichtung nach einem der Ansprüche 8 bis 13, **dadurch gekennzeichnet, daß** die Proteine und Peptide Cytokine, insbesondere Interleukine, sind.

15. Vorrichtung nach einem der Ansprüche 8 bis 14, **dadurch gekennzeichnet, daß** das Massenspektrometer 20 ein Flugzeitmassenspektrometer ist.

16. Verfahren nach einem der Ansprüche 8 bis 15, **dadurch gekennzeichnet, daß** die Ionisierungseinheit 16 über Elektrospray-Ionisation verfügt.
